# EUROPÄISCHE PATENTANMELDUNG

(11) **EP 1 041 309 A1**
(43) Veröffentlichungstag der Anmeldung: **04.10.2000**
(21) Anmeldenummer: 00106379.1
(22) Anmeldetag: 24.03.2000
(51) Int. Cl.: F16F 15/14

(54) **Drehzahladaptiver Schwingungstilger**

(30) Priorität: 01.04.1999 DE 19914871
(71) Anmelder: Firma Carl Freudenberg, 69469 Weinheim (DE)
(72) Erfinder: Hirsch, Volker, Dr., 67346 Speyer (DE); Eckel, Hans-Gerd, Dr., 69514 Laudenbach (DE); Röhrig, Bernhard, 69646 Heppenheim (DE)

(57) **Zusammenfassung**

Drehzahladaptiver Schwingungstilger für eine um eine Achse rotierende Welle mit einem Nabenteil, auf dem eine Anzahl in Umfangsrichtung benachbarter Trägheitsmassen von jeweils in zwei in Umfangsrichtung benachbarten Lagerungen geführt sind, die auf gegensinnig gekrümmten Kurvenbahnen der Trägheitsmassen und des Nabenteils abwälzbare Bolzen umfassen, so daß sich bei Einleitung von einer Rotationsbewegung überlagernden Drehschwingungen eine Veränderung des Abstands der Trägheitsmassen von der Achse im Zuge von gekrümmten Bewegungsbahnen ergibt, wobei die Trägheitsmassen (5) auf ihren radial nach innen gerichteten Seiten (10) jeweils mit mindestens einer mit einem Gewicht (12) ausgestattenen Schnappfeder (11) versehen sind, die in Ruhelage das Gewicht (12) in Richtung auf die Welle (3) drückt und die Trägheitsmasse (5) auf dem Nabenteil (4) abstützt und die unter Fliehkrafteinwirkung bei drehender Welle (3) ein Anlegen des Gewichts (12) an die Trägheitsmasse (5) zuläßt.

## Beschreibung

### Technisches Gebiet

Die Erfindung befaßt sich mit einem drehzahladaptiven Schwingungstilger für eine um eine Achse rotierende Welle mit einem Nabenteil, auf dem eine Anzahl in Umfangsrichtung benachbarter Trägheitsmassen von jeweils in zwei in Umfangsrichtung benachbarten Lagerungen geführt sind, die auf gegensinnig gekrümmten Kuvenbahnen der Trägheitsmassen und des Nabenteils abwälzbare Bolzen umfassen, so daß sich bei Einleitung von eine Rotationsbewegung überlagernden Drehschwingungen eine Veränderung des Abstands der Trägheitsmassen von der Achse im Zuge von gekrümmten Bewegungsbahnen ergibt.

Schwingungstilger der bezeichneten Art können an Wellen von periodisch arbeitenden Maschinen eingesetzt werden, beispielsweise an der Kurbelwelle eines Hubkolbenmotors. Dort treten Drehschwingungen auf, welche der Rotationsbewegung der Welle überlagert sind und deren Frequenz sich proportional mit der Drehzahl der Welle ändert. Die Schwingungstilger bewirken eine Verringerung der Drehschwingungen. Ihnen liegt das Prinzip zugrunde, daß die Trägheitsmassen unter Fliehkrafteinfluß bestrebt sind, die Welle während ihrer Drehbewegung in größtmöglichem Abstand zu umkreisen. Drehschwingungen, welche die Drehbewegung überlagern, führen zu einer Relativbewegung der Trägheitsmassen, wobei die Trägheitsmassen entlang ihrer Bewegungsbahn auch in radialer Richtung nach innen bewegt werden. Drehzahladaptive Schwingungstilger haben eine der Drehzahl proportionale Eigenfrequenz, so daß Drehschwingungen mit in gleicher Weise drehzahlabhängigen Frequenzen über einen großen Drehzahlbereich tilgbar sind.

### Stand der Technik

Ein drehzahladaptiver Schwingungstilger mit guten Eigenschaften ist in der DE PS 196.31.989 dargestellt. Bei dem bekannten Tilger sind die Trägheitsmassen möglichst groß, so daß eine maximale Tilgerwirkung erreicht wird. Darüber hinaus sind die Tilger- oder Trägheitsmassen so ausgebildet, daß sie beim Übergang von einer ruhenden Welle zur drehenden Welle und umgekehrt die mögliche Geräuschbildung durch die sich ergebenden metallischen Anschlaggeräusche der Tilger auf akzeptable Werte begrenzen. Sie sind jedoch nicht völlig ausgeschlossen, da bei den plötzlichen Übergängen vom Stillstand zur Drehbewegung der Welle, die metallischen Tilgermassen Anschlaggeräusche verursachen können.

Durch die DE PS 709.268 ist ein Schwingungstilger bekannt geworden bei dem durch Schrauben in der Trägheitsmasse eine Abstützung der Trägheitsmasse gegen die Nabenfläche erfolgt, so daß die Trägheitsmassen in der Nähe Ihrer normalen Betriebstellung gehalten werden. Diese Schrauben können die Anschlaggeräusche jedoch nicht verhindern.

In einem Ausführungsbeispiel der genannten Patentschrift ist in der Trägheitsmasse ein Kolben gleitbar gelagert, der durch eine Feder gegen die Nabe gedrückt wird. Beim Ruhezustand der Welle oder auch bei geringen Drehzahlen derselben hält der Kolben die Trägheitsmasse in ihrer äußersten Stellung um zu verhindern, daß die dort vorgesehenen Wälzkörper außer Eingriff mit den Wälzbahnen gelangen. Bei höheren Drehzahlen der Welle wird der Kolben unter Zusammenpressung der Feder in seine Bohrung hinein bewegt, so daß er einer Pendelbewegung der Trägheitsmasse nicht hinderlich ist. Die Problematik der Geräuschbildung wird in diesem Zusammenhang nicht angesprochen und ist in der Regel beim Aufeinandertreffen der metallischen Partner, Kolben und Trägheitsmasse, nicht geräuschfrei zu erwarten.

### Darstellung der Erfindung

Der Erfindung liegt die Aufgabe zugrunde, einen drehzahladaptiven Schwingungstilger so auszubilden, daß die beim Start und Stop des Motors möglichen Eigengeräusche des Schwingungstilgers soweit eliminiert werden, daß sie subjektiv nicht mehr wahrgenommen werden. Die Lösung der gestellten Aufgabe erfolgt bei einem drehzahladaptiven Schwingungstilger der Eingangs genannten Art erfindungsgemäß dadurch, daß die Trägheitsmassen auf ihren radial nach innen gerichteten Seiten jeweils mit mindestens einer mit einem Gewicht ausgestatteten Schnappfeder versehen sind, die in Ruhelage das Gewicht in Richtung auf die Welle drückt und die Trägheitsmasse auf dem Nabenteil abstützt und die unter Fliehkrafteinwirkung bei drehender Welle ein Anlegen des Gewichts an die Trägheismasse zuläßt. Durch diese Maßnahme wird gewissermaßen ein Teil der Trägheitsmasse abgetrennt und beweglich mit dem Hauptteil der Trägheitsmasse verbunden. Die Verbindung wird so gestaltet, daß oberhalb einer Schaltdrehzahl dieses Teil mit der Hauptträgheitsmasse zusammenwirkt und zur Schwingungstilgung beiträgt. Bei Stillstand der Welle dagegen wird dieses Teil durch die Schnappfeder radial Stillstand der Welle dagegen wird dieses Teil durch die Schnappfeder radial nach innen auf das Nabenteil der Welle gedrückt, wodurch der Hauptteil der Trägheitsmasse in seiner radial äußersten Stellung gehalten wird. Die Federkraft ist größer als die Eigengewichtskraft der Trägheitsmasse, so daß die Trägheitsmasse entgegen der Erdanziehung abgestützt ist.

Das jeweilige Gewicht wird auf der Symmetrieachse der zugehörigen Trägheitsmasse angeordnet. Es ist günstig wenn die Schnappfeder aus zwei seitlich vom Gewicht abstehenden, gleichlangen, aus einem elastischen Polymer bestehenden Stützbändern gebildet ist, die mit ihren Enden mit der zugehörigen Trägheitsmasse verbunden sind. Die Trägheitsmassen werden auf ihren radial inneren Seiten mit Ausnehmungen versehen, deren Kontur mit der ihnen zugewandten Außenkontur des Gewichts im wesentlichen übereinstimmt. Hierdurch kann dem Gewicht eine möglichst große Masse zugeteilt werden, die auch eine möglichst große Schwingungstilgung bei drehender Welle ergibt. Bevorzugt wird dem Gewicht etwa die Kontur eines Zylinders gegeben.

Die Schnappfeder hält das Gewicht und die zugehörige Trägheitsmasse in ihren Ruhelagen. Die radial äußere Endlage des Gewichts ist durch die Kontur der Innenseite der Trägheitsmasse bestimmt. Die Kennung der Schnappfeder ist nichtlinear und wird ihrem Verwendungszweck entsprechend ausgelegt.

Die Trägheitsmasse, die Schnappfeder und das Gewicht werden bevorzugt als integrale Einheit ausgebildet. Das Gewicht selbst ist im wesentlichen aus dem gleichen Metall wie die Trägheitsmasse. Es wird von dem Polymer der Schnappfeder zumindest teilweise umfaßt, so daß sein Anlegen an die Trägheitsmasse oder auch an das Nabenteil geräuschlos erfolgt.

Die Schaltdrehzahl, bei der die Schnappfeder umschnappt liegt bei Wellen für Antriebssmotoren unterhalb der niedrigsten Leerlaufdrehzahl. Dadurch wird sichergestellt, daß bei höheren Drehzahlen das Gewicht an der Trägheitsmasse anliegt und dadurch die Wirkung der Trägheitsmasse unterstützt. Anderseits ergibt sich bei Drehzahlen unterhalb der Leerlaufdrehzahl, daß das Gewicht an das Nabenteil gedrückt wird und bereits vor Erreichen des Stillstands der Welle ein Bedämpfen der Relationsbewegung zwischen Nabe und Trägheitsmasse erfolgt.

### Kurzbeschreibung der Zeichnung.

Anhand eines Ausführungsbeispiels wird die Erfindung näher erläutert

Es zeigt
- Fig.1: eine Draufsicht auf einen drehzahladaptiven Schwingungstilger mit fünf Trägheitsmassen bei stehender Welle und
- Fig.2: den Schwingungstilger bei drehender Welle.

### Ausführung der Erfindung

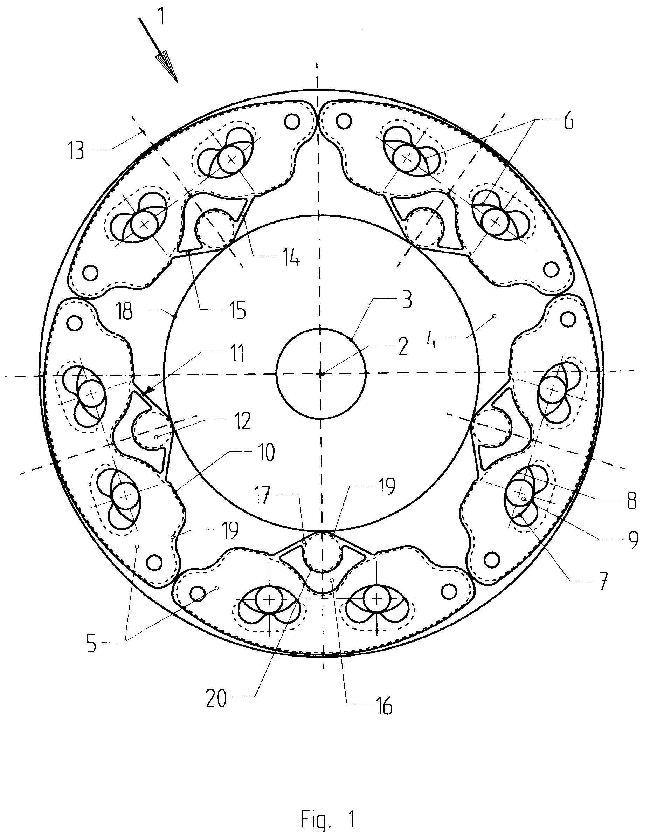

Der in der Figur 1 wiedergebene drehzahladaptive Schwingungstilger 1, dreht um die Achse 2 der Welle 3. Die Welle 3 ist mit dem Nabenteil 4 verbunden, auf dem in Umfangsrichtung fünf Trägheitsmassen 5 angeordnet sind. Die Trägheitsmassen 5 werden jeweils von zwei in Umfangrichtung benachbarten Lagerungen 6 gehalten. Nabenteil 4 und Trägheitsmassen 5 sind mit gegensinnig gekrümmten Kurvenbahnen 7 und 8 versehen, auf denen die Bolzen 9 abwälzbar angeordnet sind. Sobald bei einer Rotationsbewegung der Welle 3 überlagernde Drehschwingungen auftreten, werden die Trägheitsmassen 5 wirksam und verändern Ihre Lage in Bezug auf die Achse 2 der Welle 3.

Auf ihren radial nach innen gerichteten Seiten 10 sind die Trägheitsmassen 5 jeweils mit einer Schnappfeder 11 versehen, die in ihrer Mitte die Gewichte 12 tragen. Die Gewichte 12 sind auf der Symmetrieachse 13 der zugehörigen Trägheitsmasse 5 angeordnet. Die Schnappfeder 11 ist aus zwei seitlich vom Gewicht 12 abstehenden, gleichlangen und aus einem elastischen Polymer 17 bestehenden Stützbändem 14 und 15 gebildet. Die Stützbänder 14 und 15 sind mit Ihren Enden mit der zugehörigen Trägheitsmasse 5 verbunden. Das Gewicht 12, dargestellt durch die gestrichelte Linie 19, und auch die Trägheitsmassen 5 sind von dem Polymer 17, zumindest teilweise, eingefaßt, so daß die sich berührenden Stellen eine Dämpfung erfahren.

Auf ihren radial inneren Seiten 10, sind die Trägheitsmassen 5 mit Ausnehmungen 16 versehen, deren Kontur etwa mit der Außenkontur der ihnen zugewandten Seite 20 des Gewichts 12 übereinstimmt. Dabei ist es günstig, wenn das Gewicht 12 etwa die Kontur eines Zylinders hat.

Bei stillstehender Welle 3 drückt die Schnappfeder 11 das Gewicht 12 auf das Nabenteil 4. Hierfür ist das Nabenteil 4 mit einer entsprechenden Gegenfläche 18 versehen. Diese Lage von Schnappfeder 11 und Gewicht 12 ist in der Figur 1 eingezeichnet.

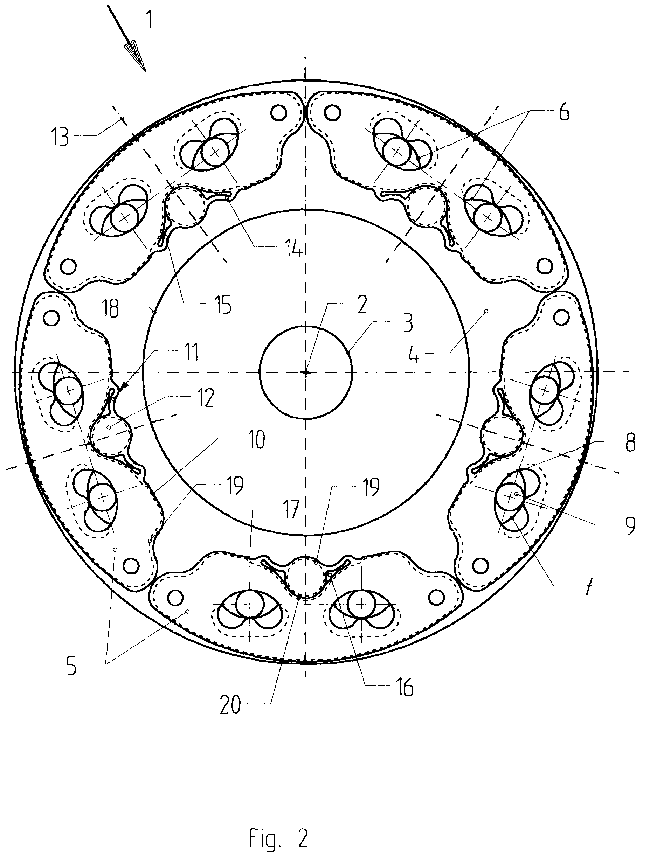

In der Figur 2 sind die Gewichte 12 in Ihrer Lage eingezeichnet, die sie unter Fliehkrafteinwirkung bei drehender Welle 3 einnehmen. Schnappfeder 11 und Gewicht 12 sind so aufeinander abgestimmt, daß bei einer vorgegebenen Drehzahl der Welle 3 das Gewicht 12 die Federkraft der Schnappfeder 11 überwindet, sich radial nach außen bewegt und in der Ausnehmung 16 der Trägheitsmasse 5 zum Anlage kommt. Durch die nichtlineare Kennung der Schnappfeder 11 erfolgt ein schneller Übergang zwischen den beiden Endlagen des Gewichtes 12 an dem Nabenteil 4 beziehungsweise in der Ausnehmung 16. In der Ausnehmung 16 trägt das Gewicht 12 zur Wirkung der Trägheitsmasse 5 bei. Das Gewicht 12 ist gewissermaßen in die Trägheitsmasse 5 integriert. Die Schnappfeder 11 übt jedoch nach wie vor einen Druck auf das Gewicht 12 in Richtung auf die Gegenfläche 18 des Nabenteils 4 aus, so daß bei nachlassender Drehzahl ab einer vorgegebenen Drehzahl die Feder 11 das Gewicht 12 wieder auf das Nabenteil 4 drückt.

Aus fertigungstechnischen Gründen ist es zweckmäßig, wenn die Trägheitsmasse 5 mit der Schnappfeder 11 und dem Gewicht 12, eine integrale Einheit bilden. Die einzelne Trägheitsmassen 5 mit ihren Bestandteilen kann dann vorgefertigt und mit Schnappfeder 11 und Gewicht 12 versehen in den Tilger 1 eingesetzt werden.

Das Gewicht 12 selbst wird aus Metall hergestellt, vorzugsweise aus dem gleichem Metall wie die einzelnen Trägheitsmassen 5. Zum einen wird hierdurch ein sicheres Einschnappen der Gewichte 12 in die Ausnehmungen 16 erreicht und zum anderen wird die Wirkung der Trägheitsmassen 5 bei der Schwingungssdämpfung unterstützt. Um jegliche Möglichkeiten von Geräuschblildung zu eliminieren, sind die Gewichte 12 von dem Polymermaterial umhüllt, welches auch gleichzeitig für die Bildung der Schnappfedern verwendet wird. Darüber hinaus sind auch die Trägheitsmassen 5 mit ihren Ausnehmungen 16 mit dem gleichen Polymermaterial ausgekleidet.

Gewichte 12 und die Federkennung der Schnappfedern 11 werden so aufeinander abgestimmt, daß bei Wellen für Antriebsmotoren die Schnappfedern 11 unterhalb der niedrigsten Leerlaufdrehzahl nachgeben und die Gewichte 12 sich radial nach außen in die Ausnehmungen 16 verlagern. Bei einem Antriebsmotor für Kraftfahrzeuge liegt das Umschnappen der Feder 11 z.B. bei etwa 500 U/min. Da alle Teile der Figur 1 und 2 identisch sind, beziehen sich die Bezugszeichen aus Figur 1 auch auf die Figur 2. Auch wird darauf hingewiesen, daß die Ausbildung und Wirkungsweise eines drehzahladaptiven Schwingungstilgers in der zum Stand der Technik gehörenden DE PS 196 31 989 ausführlich behandelt worden ist. Insoweit wird auf die genannte Druckschrift Bezug genommen. Schließlich wird noch angemerkt, daß es für die Wirkungsweise der vorliegenden Erfindung ohne Belang ist, ob das Nabenteil 4 mit beidseitig seiner Scheibe angeordneten Trägheitsmassen 5 ausgebildet ist, was im gezeigten Ausführungsbeispiel günstig ist, oder ob die Nabenscheibe die Trägheitsmassen 5 in ihrer Mitte einschließt.

## Patentansprüche

1. Drehzahladaptiver Schwingungstilger für eine um eine Achse rotierende Welle mit einem Nabenteil, auf dem eine Anzahl in Umfangsrichtung benachbarter Trägheitsmassen von jeweils in zwei in Umfangsrichtung benachbarten Lagerungen geführt sind, die auf gegensinnig gekrümmten Kurvenbahnen der Trägheitsmassen und des Nabenteils abwälzbare Bolzen umfassen, so daß sich bei Einleitung von eine Rotationsbewegung überlagernden Drehschwingungen eine Veränderung des Abstands der Trägheitsmassen von der Achse im Zuge von gekrümmten Bewegungsbahnen ergibt, **dadurch gekennzeichnet,** daß die Trägheitsmassen (5) auf ihren radial nach innen gerichteten Seiten (10) jeweils mit mindestens einer mit einem Gewicht (12) ausgestatteten Schnappfeder (11) versehen sind, die in Ruhelage das Gewicht (12) in Richtung auf die Welle (3) drückt und die Trägheitsmasse (5) auf dem Nabenteil (4) abstützt und die unter Fliehkrafteinwirkung bei drehender Welle (3) ein Anlegen des Gewichts (12) an die Trägheitsmasse (5) zuläßt.

2. Drehzahladaptiver Schwingungstilger nach Anspruch 1 dadurch gekennzeichnet, daß das jeweilige Gewicht (12) auf der Symmetrieachse (13) der zugehörigen Trägheitsmasse (5) angeordnet ist.

3. Drehzahladaptiver Schwingungstilger nach Anspruch 1 oder 2, dadurch gekennzeichnet, daß die Schnappfeder (11) aus zwei seitlich vom Gewicht (12) abstehenden, gleichlangen, aus einem elastischen Polymer bestehenden Stützbändern (14,15) gebildet ist, die mit ihren Enden mit der zugehörigen Trägheitsmasse (5) verbunden sind.

4. Drehzahladaptiver Schwingungstilger nach einem der Ansprüche 1 bis 3, dadurch gekennzeichnet, daß die Trägheitsmassen (5) auf ihren radial inneren Seiten (10) mit Ausnehmungen (16) versehen sind, deren Kontur mit der ihnen zugewandten Außenkontur den Gewichts (12) übereinstimmt.

5. Drehzahladaptiver Schwingungstilger nach einem der Ansprüche 1 bis 4, dadurch gekennzeichnet, daß das Gewicht (12) etwa die Kontur eines Zylinders hat.

6. Drehzahladaptiver Schwingungstilger nach einem der Ansprüche 1 bis 5, dadurch gekennzeichnet, daß die Schnappfeder (11) das Gewicht (12) und die zugehörige Trägheitsmasse (5) in ihren Ruhelagen hält.

7. Drehzahladaptiver Schwingungstilger nach einem der Ansprüche 1 bis 6, dadurch gekennzeichnet, daß die Schnappfeder (11) eine nichtlineare Kennung hat.

8. Drehzahladaptiver Schwingungstilger nach einem der Anspüche 1 bis 7, dadurch gekennzeichnet, daß die Trägheitsmasse (5), die Schnappfeder (11) und das Gewicht (12) eine integrale Einheit bilden.

9. Drehzahladaptiver Schwingungstilger nach einem der Ansprüche 1 bis 8, dadurch gekennzeichnet, daß das Gewicht (12) aus Metall besteht und zumindest teilweise mit einem Polymer umhüllt ist.

10. Drehzahladaptiver Schwingungstilger nach einem der Ansprüche 1 bis 9, dadurch gekennzeichnet, daß die Schaltdrehzahl, bei der die Schnappfeder (11) umschnappt, bei Wellen (3) für Antriebsmotoren unterhalb der niedrigsten Leerlaufdrehzahl liegt.
